# EUROPEAN PATENT SPECIFICATION

(11) **EP 3 323 655 B1**
(45) Date of publication and mention of the grant of the patent: **01.09.2021**
(21) Application number: 16823930.9
(22) Date of filing: 13.07.2016
(51) Int. Cl.: B60K 7/00, B62M 6/60, F16D 55/226, F16D 55/12

(54) **TRANSMISSION SYSTEM FOR VEHICLES, AND VEHICLE INCORPORATING SAID TRANSMISSION SYSTEM.**
GETRIEBESYSTEM FÜR FAHRZEUGE UND FAHRZEUG MIT SOLCH EINEM GETRIEBESYSTEM
SYSTÈME DE TRANSMISSION POUR VÉHICULES, ET VÉHICULE QUI COMPREND LEDIT SYSTÈME DE TRANSMISSION

(30) Priority: 16.07.2015 ES 201531046
(43) Date of publication of application: 23.05.2018
(73) Proprietor: Motordisc Electric Transmission, S.L., 28240 HOYO DE MANZANARES (Madrid) (ES)
(72) Inventor: ESTEPA RODRIGUEZ, Victor, 28240 HOYO DE MANZANARES (Madrid) (ES)
(74) Representative: Herrero & Asociados, S.L.
(86) International application number: PCT/ES2016/070532
(87) International publication number: WO 2017/009512

(56) References cited:
- WO-A2-2015/040544
- CN-U- 202 463 594
- DE-A1-102006 010 886
- DE-A1-102012 205 841
- DE-A1-102012 205 841
- DE-A1-102014 202 681
- FR-A1- 2 663 591
- GB-A- 2 443 687
- GB-A- 2 453 039
- GB-A- 2 453 039
- NL-C1- 1 029 320
- NL-C1- 1 029 320
- US-A1- 2015 369 316

## Description

### Object of the Invention

The present invention relates to the field of vehicles, and more specifically to mounting drive and transmission assemblies in vehicles.

The object of the present invention is a transmission system for vehicles, which is easy to install in conventional hydraulic braking systems and allows providing direct drive to the wheels, helping both with acceleration and deceleration, without power losses or complex helical gear sets, in addition to being able to act as a regenerative system during braking times for generating electric power.

### Background of the Invention

The enormous difficulty existing today in converting vehicles with an internal combustion engine into vehicles with an electric motor, so said vehicles are penalized primarily for environmental reasons, gas emission, acoustic contamination, etc., with respect to hybrid or completely electric vehicles, which have a standard built-in electrical system.

There are currently cities all around the world where cars and/or motorcycles that do not comply with this are not allowed to circulate. One type of penalization is having to pay for access to certain places, or being subjected to a higher parking rate. This restrictive tendency is on the rise.

Bicycles are also on the rise, particularly the variant thereof that comprises the aid of electric power both for pedaling and for the drive, but with systems which, due to their weight and complexity, affect two of their most highly valued characteristics, i.e., the lightness and simplicity thereof. Furthermore, vehicles with two wheels have always presented the difficulty of providing traction to the front wheel in an effective and reliable manner, therefore being unable to benefit from the enhanced safety this would entail.

It should additionally be pointed out that there are transmission systems having complex helical gears, whereby a high percentage of efficacy is lost, and such systems involve a significant power loss, in addition to increasing manufacturing, installation and assembly costs.

Patent application GB2453039A describes an electric disk drive system for a bicycle, which comprises a drive motor, a disk brake rotor and a drive gear.

Patent application DE102006010886 describes a disc brake device for generating e.g. electrical energy, said device having an interlocked brake disc contacting with drive shaft of gear wheel dynamo for generating power, where gear wheel dynamo is mounted on tiltable dynamo rocker.

### Description of the Invention

The present invention solves the drawbacks mentioned above by providing a transmission system for vehicles that is easy to install and which also allows, in addition to allowing direct drive for the wheels, by making use of the vehicle's own braking system, the actuation thereof as a regenerative system during braking times, generating electric power for the accumulation thereof in at least one battery.

More particularly, the transmission system for vehicles of the invention comprises: a brake disc having a toothing on its perimetral edge, acting as a main gear; a brake caliper coupled to the brake disc and comprising at least one electric motor assembled on said brake caliper; and wherein the at least one electric motor has a secondary gear in turn coupled to the toothing of the brake disc for the operation and/or deceleration thereof.

Therefore, this particularity of having a brake disc with the lateral edge comprising toothing, that is, provided with a plurality of cogs on the surface thereof, is what is going to allow the actual brake disc to act like a gear, in turn moved and operated by the action of at least one electric motor, preferably four in number, which are integrated in the brake caliper, thereby achieving the final traction of each of the wheels of the vehicle in which the transmission system of the invention is incorporated.

Direct drive and traction in the wheels which allows helping both with acceleration and deceleration of the vehicle in question is thereby obtained by benefitting from the actual breaking assembly thereof. This allows simplifying and making the installation of the transmission system of the invention easier, requiring no additional space or location in the vehicle, while at the same time benefitting from the sturdiness and safety of the braking system, allowing for considerable decelerations and accelerations.

Furthermore, currently existing complex helical gear sets, which involved considerable power losses, are thereby avoided. It should therefore be pointed out that the transmission system of the invention is completely compatible with and/or can be coupled in the braking system of the vehicle itself, requiring no modification in said vehicle, that is, the hydraulic pistons pushing the brake pads are still perfectly operative.

Preferably, the brake caliper further comprises at least one intermediate gear coupled both to the toothing of the brake disc and to the secondary gear of the at least one electric motor, thereby achieving optimal transmission of the rotational movement of the electric motor to the brake disc. More preferably, said brake caliper has been envisaged to incorporate two pairs of electric motors, wherein the electric motors of each pair are connected to one another through one and the same secondary gear.

According to another object of the invention, a vehicle comprising the transmission system described above and envisaged as being a bicycle with two wheels, or an automobile with four wheels, is described.

On the other hand, it should be pointed out that the transmission system herein described can be applied to both the front wheels and the back wheels of the vehicle, thereby providing enhanced safety and stability of the vehicle while it is being driven.

As discussed above, the possibility of the electric motors being able to act in both normal traction mode and regenerative mode, allowing an electric battery to be recharged during braking times of the vehicle, has been contemplated.

### Description of the Drawings

To complement the description that is being made and for the purpose of helping to better understand the features of the invention according to a preferred practical embodiment thereof, a set of drawings is attached as an integral part of said description, wherein the following has been depicted in an illustrative and non-limiting manner:
Figure 1 shows a side view of the wheel of a vehicle incorporating the transmission system object of invention.
Figure 2 shows a schematic view where the coupling between the different gears of the transmission system, as well as the perimetral toothing of the brake disc, can be seen.
Figure 3 shows a plan view of a brake disc incorporating the transmission system of the invention, and where up to four electric motors integrated in the brake caliper can be seen.
Figures 4A, 4B show perspective views of the transmission system of the invention without the cover or casing characteristic of the brake caliper, the system being compatible with conventional hydraulic braking systems, provided with hydraulic pistons and brake pads.
Figure 5 shows a side view of an electric bicycle with a hydraulic braking system, incorporating the transmission system of the invention both in the front wheel and in the rear wheel.
Figure 6 shows a schematic plan view of a vehicle with four wheels, each of which incorporates the transmission system of the invention.
Figure 7 shows another embodiment of the brake disc, a ventilated brake disc to improve the cooling and dissipation of heat from the disc being seen in this case.

### Preferred Embodiment of the Invention

A preferred embodiment is described below in reference to the drawings mentioned above, without this limiting or narrowing the scope of protection of the present invention.

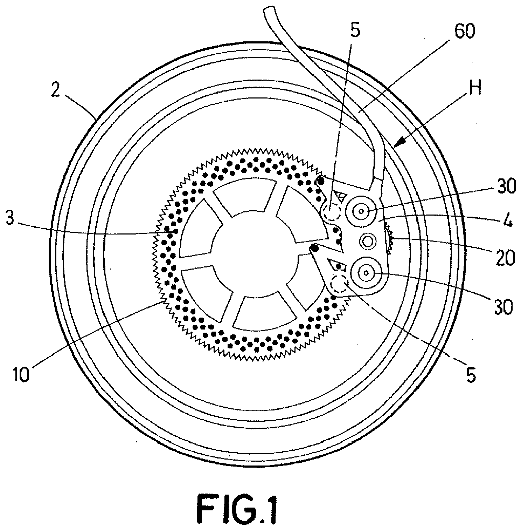

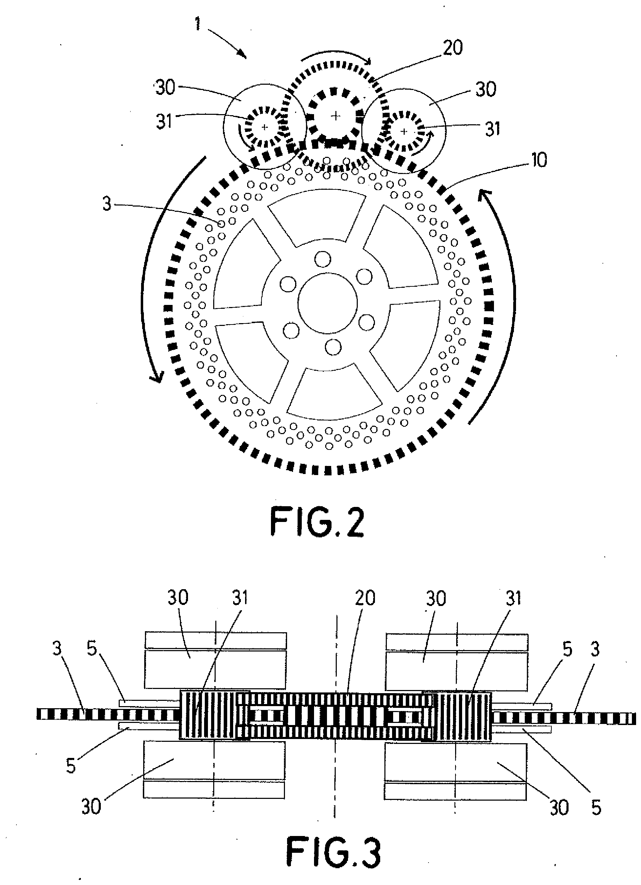

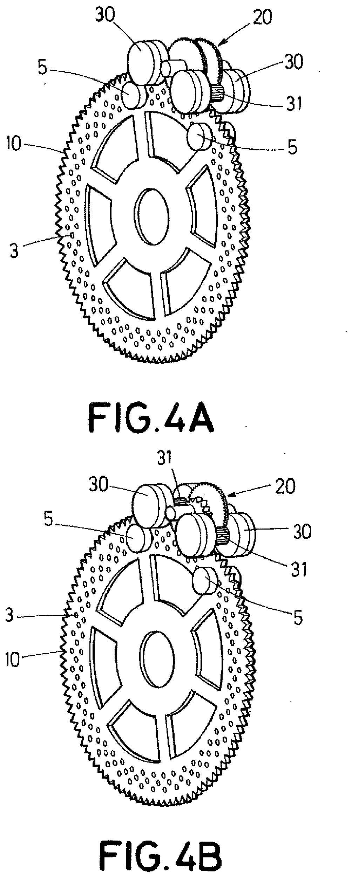

Figure 1 shows a side view of the wheel (2) of a vehicle incorporating the transmission system (1) of the invention, which comprises:
- a brake disc (3) having a toothing (10) on its perimetral edge, and acting as a main gear;
- a brake caliper (4) coupled to the brake disc (3) and comprising electric motors (30) assembled on said brake caliper (4), there being two pairs of electric motors (30) in the present embodiment as depicted in Figures 3, 4A and 4B; wherein said electric motors (30) have a secondary gear (31) in turn coupled to the toothing (10) of the brake disc (3) for the operation and/or deceleration thereof;
- and wherein the brake caliper (4) in this preferred embodiment further comprises an intermediate gear (20) coupled both to the toothing (10) of the brake disc (3) and to the secondary gear (31) of the electric motors (30), which allows optimal transmission of the rotational movement of each of the electric motors (30) to the toothing (10) of the brake disc (3).

Therefore, although an intermediate gear (20) located between each pair of electric motors (30) has been incorporated in the present embodiment, it has been envisaged that the transmission system (1) can dispense with said intermediate gear (20), so in that case, the brake disc (3) would be operated directly by the electric motors (30) and their corresponding secondary gears (31).

Going into further detail in Figures 3, 4A and 4B, it can be seen that the electric motors (30) of each pair are connected to one another through one and the same secondary gear (31), which simplifies installation and reduces the number of required components down to the minimum, while at the same time the provision of movement delivered by each pair of electric motors (30) is maximized.

Furthermore, in said Figures 3, 4A and 4B it can be seen that the electric motors (30) are arranged facing one another in twos, one on either side of the intermediate gear (20) of the brake caliper (4), as well as one on either side of the brake disc (3). This especial arrangement of the electric motors (30) is not random, but rather has been implemented for the sake of achieving optimal balancing and distribution of the weight of each of them, thereby favoring the stability and drivability of the vehicle in question, placing the center of mass of the transmission system (1) at a point close to said intermediate gear (20) of the brake caliper (4).

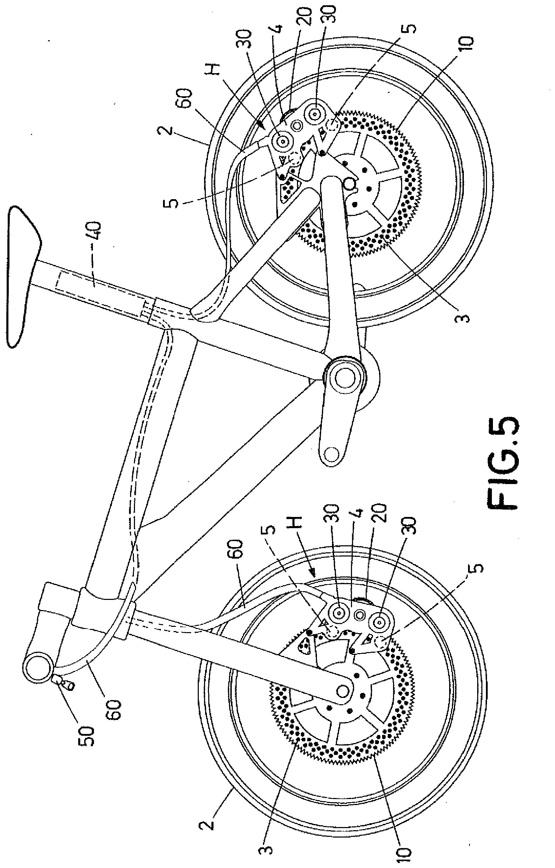

Figure 5 shows a bicycle with two wheels (2), which includes a hydraulic braking mechanism (H) associated with each of both the front and rear wheels (2), and provided with a brake disc (3) and a brake caliper (4) in turn coupled to said brake disc (3), each brake caliper (4) having its corresponding hydraulic pistons (5). This particular feature of including the transmission system (1) both in the front wheel (2) and in the rear wheel (2) of the bicycle provides stability, sturdiness and safety, making it easier and more comfortable for the user to drive it.

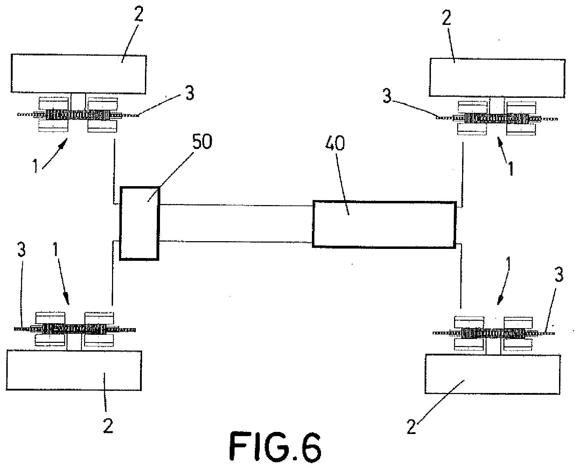

In turn, Figure 6 shows a schematic plan view of a vehicle with four wheels (2) incorporating the transmission system (1) of the invention associated with each of the brake discs (3) of its wheels (2), thereby obtaining complete control over the acceleration or deceleration of each of them by means of the aforementioned control unit (50) which in this case is depicted in a central location of the vehicle. As can be seen in said Figure 6, the installation of the transmission system (1) of the invention is not at all complex nor does it require a volume of space that is greater than that required by the actual braking system, simply providing a site for the electric motors (30) on the brake caliper (4) is enough.

Furthermore, both in the embodiment of Figure 5 and in the embodiment of Figure 6, it can be seen that the electric motors (30) are connected to a battery (40) for supplying power to same, as well as for allowing electric power to accumulate for those braking times of the vehicle where the electric motors act in regenerative mode.

The possibility of the transmission system (1) of the invention additionally comprising a control unit (50) for regulating and controlling the operation of the electric motors (30), whether it is in normal traction or acceleration mode, or in regenerative or deceleration mode, for recharging the battery (40) during braking times of the vehicle has also been contemplated.

It should furthermore be indicated that the control unit (50) and the electric motors (30) are connected to one another through wiring integrated in guides (60) characteristic of the hydraulic braking mechanism (H) of the vehicle. Again, benefitting from and making use of the breaking assembly of the vehicle itself, in this case the hydraulic guides (60), allows simplifying the installation of the wiring for the transmission system (1) while at the same time providing protection therefor, without having to incorporate complex additional connections or require duplicate independent wiring which would be more dangerous as it could get snagged on something and/or due to accidents, thereby increasing its operating service life.

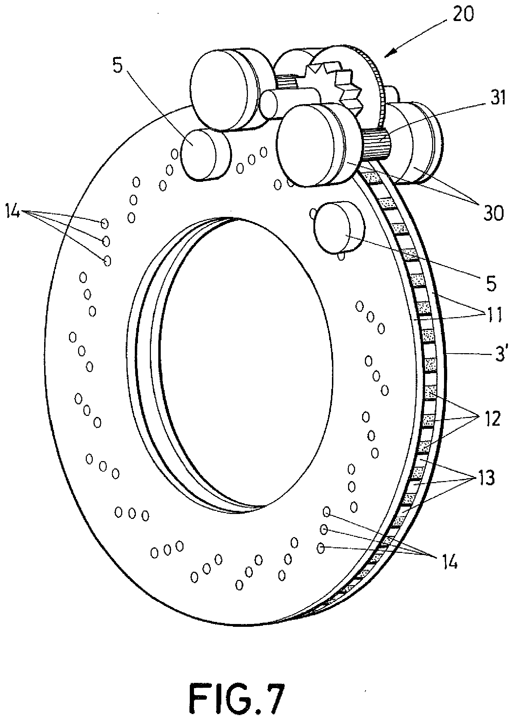

Finally, according to another preferred embodiment the brake disc has been envisaged as a ventilated brake disc (3'), like the one shown in Figure 7, whereby dissipation of heat from the disc is considerably improved. In this regard, ventilated brake discs are known to offer lower temperatures with respect to solid brake discs and therefore offer greater performance.

More particularly, this ventilated brake disc (3') comprises two parallel side walls (11), arranged such that they are spaced from one another, between which there are arranged a plurality of transverse protrusions (12) communicating both side walls (11) with one another, wherein gaps (13) are defined between said transverse protrusions (12) for air to circulate therethrough. The secondary gear (31) of the electric motors (30) therefore acts directly on the transverse protrusions (12), which will perform the function performed by the toothing of the disc of the first embodiment, that is, acting as a main gear for the operation and/or deceleration of the ventilated brake disc (3'). The ventilated brake disc (3') could also additionally incorporate an intermediate gear (20), which in this case would be coupled both to the transverse protrusions (12) and to the secondary gear (31) of the electric motors (30).

More preferably, the possibility of the ventilated brake disc (3') furthermore including a plurality of perforations (14) made in each of the side walls (11) has been contemplated, wherein said perforations (14) allow preventing cracks from progressing, in size, in the disc (3') and allow lightening the total weight thereof, in addition to providing enhanced cooling.

## Claims

1. Transmission system (1) for vehicles comprising:
- a brake disc (3) having a toothing (10) on its perimetral edge, acting as a main gear;
- a brake caliper (4) coupled to the brake disc (3); and
- at least one electric motor (30) having a secondary gear (31) coupled in turn to the toothing (10) of the brake disc (3) for the operation and/or deceleration thereof;
**characterised in that** the at least one electric motor (30) is assembled on the brake caliper (4); said electric motor (30) being connected to at least one battery (40) for supplying power to same;
the transmission system (1) further comprises a control unit (50) for control over the operation of the at least one electric motor (30);
and wherein the at least one electric motor (30) is connected to the control unit (50) for the operation thereof, both in normal traction mode and in regenerative mode for recharging the battery (40) during braking times of the vehicle.

2. Transmission system (1) according to claim 1, **characterized in that** the brake caliper (4) further comprises at least one intermediate gear (20) coupled both to the toothing (10) of the brake disc (3) and to the secondary gear (31) of the at least one electric motor (30).

3. Transmission system (1) according to any one of the preceding claims, **characterized in that** the brake caliper (4) has two pairs of electric motors (30), wherein the electric motors (30) of each pair are connected to one another through one and the same secondary gear (31).

4. Transmission system (1) according to claims 2 and 3, **characterized in that** the electric motors (30) are arranged facing one another in twos, one on either side of the intermediate gear (20) of the brake caliper (4), as well as one on either side of the brake disc (3).

5. Transmission system (1) according to claim 1, **characterized in that** the control unit (50) and the at least one electric motor (30) are connected through wiring integrated in guides (60) of a hydraulic braking mechanism (H).

6. Transmission system (1) according to claim 1, **characterized in that** the brake disc is a ventilated brake disc (3') comprising two parallel side walls (11), arranged such that they are spaced from one another; a plurality of transverse protrusions (12) communicating both side walls (11) with one another and located between said side walls (11); wherein gaps (13) are defined between said transverse protrusions (12) for air to circulate therethrough.

7. Transmission system (1) according to claim 6, **characterized in that** the ventilated brake disc (3') further comprises a plurality of perforations (14) made in each of its side walls (11).

8. Vehicle comprising the transmission system (1) described in any of claims 1-7.

9. Vehicle according to claim 8, **characterized in that** it is a bicycle with two wheels (2).

10. Vehicle according to claim 8, **characterized in that** it is an automobile with four wheels (2).

## Patentansprüche

1. Getriebesystem (1) für Fahrzeuge, aufweisend:
- eine Bremsscheibe (3) mit einer Verzahnung (10) an ihrem Umfangsrand, die als Hauptzahnrad wirkt;
- einen Bremssattel (4), der mit der Bremsscheibe (3) gekoppelt ist; und
- mindestens einen Elektromotor (30) mit einem Sekundärzahnrad (31), das wiederum mit der Verzahnung (10) der Bremsscheibe (3) zu deren Betätigung und/oder Abbremsung gekoppelt ist;
**dadurch gekennzeichnet, dass** der mindestens eine Elektromotor (30) an dem Bremssattel (4) montiert ist; wobei der Elektromotor (30) mit mindestens einer Batterie (40) zur Energieversorgung derselben verbunden ist;
das Getriebesystem (1) ferner eine Steuereinheit (50) zur Steuerung des Betriebs des mindestens einen Elektromotors (30) aufweist;
und wobei der mindestens eine Elektromotor (30) mit der Steuereinheit (50) verbunden ist, um diesen sowohl im normalen Traktionsmodus als auch im regenerativen Modus zum Aufladen der Batterie (40) während der Bremszeiten des Fahrzeugs zu betreiben.

2. Getriebesystem (1) nach Anspruch 1, **dadurch gekennzeichnet, dass** der Bremssattel (4) ferner mindestens ein Zwischenzahnrad (20) umfasst, das sowohl mit der Verzahnung (10) der Bremsscheibe (3) als auch mit dem Sekundärzahnrad (31) des mindestens einen Elektromotors (30) gekoppelt ist.

3. Getriebesystem (1) nach einem der vorhergehenden Ansprüche, **dadurch gekennzeichnet, dass** der Bremssattel (4) zwei Paare von Elektromotoren (30) aufweist, wobei die Elektromotoren (30) eines jeden Paares über ein und dasselbe Sekundärzahnrad (31) miteinander verbunden sind.

4. Getriebesystem (1) nach Anspruch 2 und 3, **dadurch gekennzeichnet, dass** die Elektromotoren (30) paarweise einander gegenüberliegend angeordnet sind, und zwar jeweils einer auf jeder Seite des Zwischenzahnrads (20) des Bremssattels (4), sowie einer auf jeder Seite der Bremsscheibe (3).

5. Getriebesystem (1) nach Anspruch 1, **dadurch gekennzeichnet, dass** die Steuereinheit (50) und der mindestens eine Elektromotor (30) über eine in Führungen (60) eines hydraulischen Bremsmechanismus (H) integrierte Verkabelung verbunden sind.

6. Getriebesystem (1) nach Anspruch 1, **dadurch gekennzeichnet, dass** die Bremsscheibe eine belüftete Bremsscheibe (3') ist, die zwei parallele Seitenwände (11) umfasst, die so angeordnet sind, dass sie voneinander beabstandet sind; eine Mehrzahl von Quervorsprüngen (12) die beiden Seitenwände (11) miteinander verbindet und sich zwischen den Seitenwänden (11) befindet; wobei zwischen den Quervorsprüngen (12) Lücken (13) definiert sind, durch die Luft zirkulieren kann.

7. Getriebesystem (1) nach Anspruch 6, **dadurch gekennzeichnet, dass** die belüftete Bremsscheibe (3') ferner eine Mehrzahl von Perforationen (14) aufweist, die in jeder ihrer Seitenwände (11) eingebracht sind.

8. Fahrzeug, das das Getriebesystem (1) nach einem der Ansprüche 1 bis 7 aufweist.

9. Fahrzeug nach Anspruch 8, **dadurch gekennzeichnet, dass** es sich um ein Fahrrad mit zwei Rädern (2) handelt.

10. Fahrzeug nach Anspruch 8, **dadurch gekennzeichnet, dass** es sich um ein Automobil mit vier Rädern (2) handelt.

## Revendications

1. Système de transmission (1) pour véhicules comprenant :
- un disque de frein (3) ayant une denture (10) sur son bord périmétrique, agissant comme un engrenage principal ;
- un étrier de frein (4) couplé au disque de frein (3) ; et
- au moins un moteur électrique (30) ayant un engrenage secondaire (31) couplé à son tour à la denture (10) du disque de frein (3) pour le fonctionnement et/ou la décélération de celui-ci ;
**caractérisé en ce que** ledit au moins un moteur électrique (30) est assemblé sur l'étrier de frein (4) ; ledit moteur électrique (30) étant connecté à au moins une batterie (40) pour l'alimenter en énergie ;
le système de transmission (1) comprend en outre une unité de commande (50) pour commander le fonctionnement dudit au moins un moteur électrique (30) ;
et dans lequel ledit au moins un moteur électrique (30) est connecté à l'unité de commande (50) pour son fonctionnement, à la fois en mode de traction normal et en mode de régénération pour recharger la batterie (40) pendant les temps de freinage du véhicule.

2. Système de transmission (1) selon la revendication 1, **caractérisé en ce que** l'étrier de frein (4) comprend en outre au moins un engrenage intermédiaire (20) couplé à la fois à la denture (10) du disque de frein (3) et à l'engrenage secondaire (31) dudit au moins un moteur électrique (30).

3. Système de transmission (1) selon l'une quelconque des revendications précédentes, **caractérisé en ce que** l'étrier de frein (4) a deux paires de moteurs électriques (30), dans lequel les moteurs électriques (30) de chaque paire sont reliés entre eux par un seul et même engrenage secondaire (31).

4. Système de transmission (1) selon les revendications 2 et 3, **caractérisé en ce que** les moteurs électriques (30) sont disposés en vis-à-vis par deux, un de chaque côté de l'engrenage intermédiaire (20) de l'étrier de frein (4), ainsi qu'un de chaque côté du disque de frein (3).

5. Système de transmission (1) selon la revendication 1, **caractérisé en ce que** l'unité de commande (50) et ledit au moins un moteur électrique (30) sont reliés par un câblage intégré dans des guides (60) d'un mécanisme de freinage hydraulique (H).

6. Système de transmission (1) selon la revendication 1, **caractérisé en ce que** le disque de frein est un disque de frein à ventilation (3') comprenant des parois latérales parallèles (11), disposées de telle sorte qu'elles sont espacées les unes des autres ; une pluralité de saillies transversales (12) faisant communiquer les deux parois latérales (11) entre elles et situées entre lesdites parois latérales (11) ; dans lequel des espaces (13) sont définis entre lesdites saillies transversales (12) pour que l'air circule à travers elles.

7. Système de transmission (1) selon la revendication 6, **caractérisé en ce que** le disque de frein à ventilation (3') comprend en outre une pluralité de perforations (14) réalisées dans chacune de ses parois latérales (11).

8. Véhicule comprenant le système de transmission (1) décrit dans l'une quelconque des revendications 1 à 7.

9. Véhicule selon la revendication 8, **caractérisé en ce qu'**il s'agit d'une bicyclette à deux roues (2).

10. Véhicule selon la revendication 8, **caractérisé en ce qu'**il s'agit d'une automobile à quatre roues (2).
